# EUROPEAN PATENT SPECIFICATION

(11) **EP 2 511 677 B1**
(45) Date of publication and mention of the grant of the patent: **19.08.2020**
(21) Application number: 11162014.2
(22) Date of filing: 12.04.2011
(51) Int. Cl.: G01G 19/08, B25J 9/16, B66F 17/00, E02F 9/26

(54) **Monitoring system for a material transfer vehicle**
Überwachungssystem für ein Materialtransportfahrzeug
Système de surveillance pour véhicule de transfert de matériel

(43) Date of publication of application: 17.10.2012
(73) Proprietor: TAMTRON OY, 33561 Tampere (FI)
(72) Inventor: Asikainen, Pentti, 33500, Tampere (FI)
(74) Representative: Heinonen & Co

(56) References cited:
- US-A1- 2002 075 157
- US-A1- 2008 262 682

## Description

### FIELD OF THE INVENTION

This invention relates generally to a monitoring system of a material transfer vehicle. The present invention can be applied for weighing a load of the vehicle, for monitoring physical stability of the vehicle as well as for other monitoring purposes. The material transfer vehicle may be e.g. a wheel loader, a forklift, an excavator, a dumper, a forwarder, a harvester, a crane, a passenger hoist, a timber jack, or a truck such as a fire truck, a forklift truck, a pallet truck, a reach truck, or a garbage truck.

### BACKGROUND OF THE INVENTION

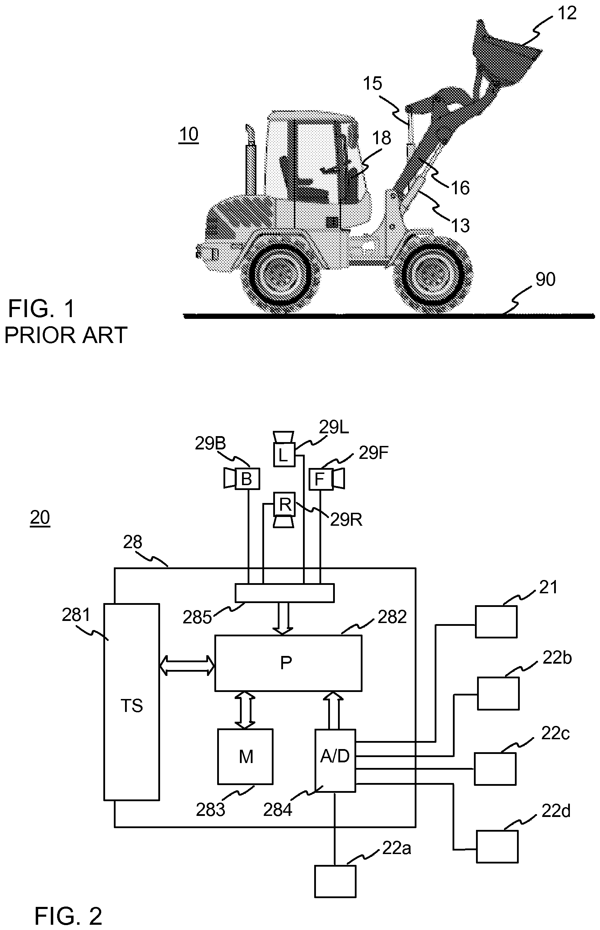

Material transfer vehicles often include a weighing arrangement for weighing material which is handled or carried. Figure 1 illustrates an exemplary material transfer vehicle according to the prior art, a wheel loader 10 located on ground 90. The wheel loader has a bucket 12 as a carrying means for the material to be transferred. The bucket is connected to the body parts / chassis of the wheel loader with an articulated beam 16. In order to lift/lower the bucket, hydraulic cylinders 13 are connected to the beam, and the cylinders are controlled with valves. Additionally, the wheel loader has hydraulic cylinders 15 for turning the bucket.

The purpose of the weighing device of the wheel loader is to measure the weight of the material which is currently placed in the bucket. The weighing arrangement may have electronic or hydraulic weighing sensors in the boom structure. For example, pressure sensors may be installed in the lifting cylinders, which pressure sensors measure the pressure of the hydraulic liquid in the cylinder. Alternatively, strain-gauge transducers can be used as weighing sensors, which can be installed in the joint between the bucket and the beam, for example.

However, the position, angle and movement of the chassis, boom or bucket of the material transfer vehicle has an effect on the output signal values of the weighing sensors, and the data of the weighing sensors should therefore be compensated with acceleration/position information. Such a compensation system is disclosed in patent document EP1083415B1. For the compensation purpose a material transfer vehicle may include position sensors, such as accelerometers, in the chassis of the material transfer vehicle. An excavator, for example, may also have sensors, such as accelerometers, for measuring the position of each boom for the compensation of the weighing.

The information received from the sensors is processed on the basis of measurement parameters, and a weighing result is achieved as a result of the processing. An electronics unit with user interface 18 of the weighing device is usually placed in the cabin of a vehicle.

Material transfer vehicles may also have systems for monitoring mechanical stability of the vehicle. This is necessary in order to avoid the vehicle from overturning. Such a risk of overturning may appear due to uneven base/ground 90, heavy load, and movement of the vehicle and/or movement of the load. For example, it is possible to monitor stability by measuring load on axles of the vehicle. If the load value on any axle or wheel is below a limit value, an alarm is given by the monitoring system.

In using a material transfer vehicle there is a need to monitor the environment in order to avoid a collision with any other object. An excavator, for example, may move in different directions, the cabin may rotate, and the boom/bucket of the vehicle may turn. Therefore, it is required to monitor the environment of the vehicle also in other directions than the front direction of the driver.

There are some disadvantages related to the prior art solutions. If only weight is used for monitoring the risk of overturning such monitoring does not take into account effects of uneven ground or movement of the vehicle, for example. There are also separate monitoring systems available, which measure the acceleration of the vehicle. However, such a system is costly to produce and install because specific sensors, processing and user interface units are required for this purpose. There are also separate camera based systems for monitoring environment of the vehicle. However, a separate camera system with additional monitor is also costly and it is necessary to have room for the monitor of the camera system in a suitable location in the cabin.

Document US2002075157A1 discloses a prior art stability system for a machine carrying a load. The system uses a front sensor system producing a front signal based on front weight and position, a rear sensor system producing rear signal based on rear weight and position, and a controller for producing a stability output based on front and rear signals.

Document US2008262682A1 discloses a method for controlling breaking force of a vehicle in order to prevent tipping of the vehicle. Axle weights and speed of the vehicle are measured for controlling the breaks.

### SUMMARY OF THE INVENTION

The objective of the present invention is to avoid or at least alleviate the aforesaid defects of prior art solutions and to achieve a solution by which the required measurements are provided for both accurate weighing of a load and stability monitoring of the vehicle.

The objective of the invention is met by a solution, wherein a material transfer vehicle has at least one sensor for weighing and at least one sensor, a gyroscope, for measuring angle of the vehicle or parts of the vehicle. The monitoring system has at least one common part used for both weighing the load and for measuring the mechanical stability. In the inventive system e.g. a same weighing sensor may be used for both weighing a load of the carrying means and for monitoring a risk of overturning, and e.g. a same sensor for measuring acceleration/angle of the vehicle may be used both for compensating the weighing signal to achieve a compensated weighing result, and for monitoring the physical stability of the vehicle.

A monitoring system according to the invention for a material transfer vehicle, wherein the material transfer vehicle has means for carrying material, and the monitoring system comprises:
- at least one first sensor for weighing the material being carried by the carrying means;
- at least one second sensor for measuring an angle of a base, boom and/or bucket of the material transfer vehicle in respect to a horizontal plane or other part of the material transfer vehicle;
- processing means for providing a weight measurement result of the material on the basis of the information received from the first sensor and the second sensor,
- user interface for providing information on the weight measurement result, is characterized in that the monitoring system further comprises means for monitoring physical stability of the material transfer vehicle, and the monitoring system comprises common means, wherein the common means are arranged to handle both the weighing and the stability monitoring.

The inventive system offers an advantage of reduction in production and installation costs while same unit(s), part(s), component(s), cabling, and/or software can be used for both the measurement of load weight and the stability monitoring. It is also possible to install the system in a smaller and ergonomically optimal space in the cabin of the vehicle.

According to the invention the common means comprises the first sensor. The monitoring system thus uses the same sensor for measuring load weight in both weight measurement and stability measurement. The weight sensor may be a strain gauge transducer or a pressure sensor, for example.

According to the invention the common means comprises the second sensor. The monitoring system thus uses the same sensor for measuring acceleration and/or angle both for compensation of the weight measurement and for vehicle stability measurement. The angle sensor is according to the invention a gyroscope. If acceleration sensor is used, it can be based on measuring forces on a mass, for example.

According to the invention the common means comprises the user interface. It is thus possible to have both weighing information and stability information on the same display, for example. It may also be possible to control the both functions with same input means, such as a touch screen, push buttons or switches. It is easier to find ergonomically optimal location for one user interface in the cabin than for several separate user interfaces. A common user interface also reduces the product cost.

According to the invention the common means comprises the processing means. Thus the processing of the weighing measurement data and the stability measurement data is provided with same processing means such as a processor. The calculation of the weight compensation and risk of overturning can be done on the basis of weighing data, vehicle data and/or data on angles, positions, movement and/or acceleration of the vehicle and/or structures of the vehicle. The related parameters and formulas can be stored in a memory of the monitoring system.

According to a preferable embodiment the monitoring system is arranged to give an alarm for the user if the risk of overturning or the load weight exceeds a corresponding predetermined limit. It is also possible that the movement of the vehicle, boom or carrying means is restricted by the monitoring means in such a situation. It is further possible that the movements/controls are restricted in a user specific manner. In such case the user is identified by the monitoring system, and user specific parameters are stored and used in the monitoring system for determining allowed controlled speeds of the vehicle parts, especially when the risk of overturning is near to the maximum allowed value. It is also possible that the maximum allowed value for the risk of overturning is user specific. This way an experienced user is able to use the vehicle with less safety restriction than an inexperienced user.

In one embodiment the monitoring system is arranged to determine the movement/speed/position/angle restrictions of the vehicle and/or parts of the vehicle by learning. In such a learning mode, the monitoring system monitors the measurement signals and detects risk situations, for example, where a wheel of the vehicle is detached from ground. Based on safe and risk situations the monitoring system then determines restrictions for the movements/positions/angles/speed/ weight of the vehicle and vehicle parts such as booms and carrying means, as well as allowed tilt angle of ground.

It is also possible to use the monitoring system for keeping a cabin or a carrying means in a determined position, preferably horizontal position. For example, it is possible to use the gyroscope angle sensors for measuring the horizontal tilt angle of a platform of a passenger hoist, and to use this information for the control of the platform in order to keep the platform in a horizontal position. As another example, it is possible to use the gyroscope sensors of the monitoring system for measuring the horizontal tilt angle of the cabin in an excavator or a harvester and use this information for controlling the position of the cabin in such a way that the cabin is kept in a horizontal position. This way the driver of the vehicle is not disturbed by tilting of the vehicle caused by uneven ground.

It is further possible to use the gyroscope sensors of the monitoring system for controlling the position of a bucket during lifting, for example. Such a feature can be advantageous in wheel loaders, excavators etc. During lifting it is advantageous to keep the bucket in a certain position in relation to horizontal plane in order to avoid the load from becoming poured out from the bucket. To achieve this it is necessary to turn the bucket in relation to the boom during the lifting in order to compensate the change of the boom angle. In prior art, this has been achieved with specific mechanical structures. However, the signal from the gyroscope of the bucket and possibly gyroscope(s) of the boom(s) can be used for detecting the position of the bucket in relation to the horizontal plane, and the position information can be further used for controlling the bucket position to keep the bucket in a fixed angle/position in relation to the horizontal plane.

It is possible to implement the controlling of a cabinet, a platform or a bucket to stay in a determined angle in respect to the horizontal plane without weighing. Therefore weighing sensor(s) of the monitoring system are not necessarily used for this functionality.

According to one embodiment the monitoring system is applied for controlling hydraulic cylinders which have more than piston, e.g. so-called digital hydraulic cylinders. When such a hydraulic cylinder is actuated one or several pistons are used. The activated cylinder(s) is preferably selected on the basis of the weight of the load. This way it is possible to achieve good efficiency of the hydraulic system. Information on the load weight can be obtained with the present monitoring system for the usage of a digital hydraulic system. It is also possible that the monitoring system provides the selection of the actuated pistons on the basis of the weight of the load. In this case the monitoring system may output control signals for the hydraulic pistons.

According to one embodiment the monitoring system also has a camera monitoring facility for monitoring the environment of the vehicle. The system may have, for example, four cameras which are directed in orthogonal directions. The cameras may be located at the roof of the vehicle or at the sides at the roof of the vehicle. In one embodiment the display of the monitoring system shows an image from one camera at a time. The active camera is selected, for example, on the basis of the movement of the vehicle. The camera which best views in the direction of the vehicle movement is selected active. It is possible that the active camera is selected also on the basis of rotation of the vehicle cabin in case of an excavator, for example. When the cabin is rotated, such a camera can be selected active which views to the direction of the rotation. It is further possible to use the cameras for monitoring environment even when the vehicle is not operating for the material transfer. The monitoring system may also have means for wireless transfer of images and/or other measured data to a distant location.

According to one embodiment the monitoring system has means for detecting distance between nearby objects and the vehicle. The monitoring system may be arranged to give an alarm if the detected distance is smaller than a predetermined threshold safety distance.

According to one embodiment the monitoring system has a functionality to record monitored data. The recorded data may include measured load weights, measured stability information, including provided alarms, and/or images/video received from the camera(s). The data to be recorded may also be selectable. In the recording it is preferable to include time information of the recording moment into the recorded data. The recorded data may be used in analyzing accidents, for example.

Some further embodiments of the present invention are disclosed in the dependent claims.

As described above, it is possible to achieve substantial advantages with the present invention. In the inventive solution, it is not required to install separate acceleration/angle sensors for weighing and stability monitoring purposes. It is also possible to install and use a single electronics unit in the cabinet of the vehicle. All data processing and presentation can be made with a single processor unit and single user interface. It is thus possible to get information and apply controls concerning both the load weights and vehicle stability as well as possible other monitoring functions at the same user interface. Further, it is possible to have a camera view displayed on the same user interface. While the single electronics unit may replace three separate units in the vehicle cabin, it is possible to achieve essential benefits in installation, equipment costs, usability/ergonomics and requirement of cabinet space for the equipment.

In this patent application, a "material transfer vehicle" refers to all kinds of vehicles having carrying means for carrying a load and means for transferring the load. The material transfer vehicle may be e.g. a wheel loader, a forklift, an excavator, a dumper, a forwarder, a harvester, a crane, a passenger hoist, a timber jack, or a truck such as a fire truck, a forklift truck, a pallet truck, a reach truck, or a garbage truck.

In this patent application term "common" is used in a meaning that a sensor, other component, part, unit or function serves for at least following two purposes; measuring the load weight of the carrying means of the material transfer vehicle, and monitoring the physical stability / risk of overturning of the material transfer vehicle.

In this patent application term "horizontal plane" means a plane which is perpendicular to the force of gravitation of the earth.

### BRIEF DESCRIPTION OF THE DRAWINGS

Next the invention will be described in more detail with reference to the following drawings:
- Fig. 1: illustrates a wheel loader with a prior art weighing arrangement;
- Fig. 2: illustrates a block diagram of an exemplary arrangement according to one embodiment of the invention;
- Fig. 3: illustrates an excavator including an exemplary monitoring system according to the invention.

### DETAILED DESCRIPTION OF EMBODIMENTS

Figure 1 was described in the prior art section above.

Figure 2 illustrates a block diagram for a monitoring system 20 according to an embodiment of the invention. The system has a sensor 21 of a first type for weighing a load on carrying means. The first sensor may be a strain gauge transducer in an articulating joint of the vehicle or a pressure transducer in a hydraulic cylinder, for example, whose output signal is proportional to the load weight. The signal from the first sensor is led to an electronics unit 28 with wireless data transfer or a cable, and the signal is further amplified and converted into digital form in an analog-to-digital (A/D) converter 284. The digital signal is read by a processor 282, which calculates a weight value of the load.

The monitoring system of Figure 2 also has four sensors of a second type, preferably gyroscopes measuring angle, but they may alternatively be other conventional sensors measuring angle, acceleration or relative position. Sensor 22a of Figure 2 can be a gyroscope for measuring the angle of the cabin of the material transfer vehicle, for example. The angle may be measured in relation to horizontal plane. The sensor 22a may include a magnetic sensor or an acceleration sensor in addition or alternatively to the gyroscope. Sensor 22b may measure the angle of a first boom of the material transfer vehicle, for example. The angle may be measured in relation to the horizontal plane. The sensor for measuring angle may be based on a gyroscope. Alternatively it is possible to use an accelerometer measuring forces on a small mass. If the boom structure of the material transfer vehicle includes two booms articulated with each other, the sensor 22c may measure the position of the second boom. There is preferably also a sensor 22d for measuring the position of the carrying means. These sensors are preferably based on gyroscopes, but they may alternatively be mechanical or optical sensors measuring relative position between two booms or between a boom and a carrying means. The signals from gyroscopes and/or acceleration and/or angle sensors are led wirelessly or via cables to the electronics unit 28, in which the signals are amplified and converted into digital form by the A/D converter 284. The digital signals are read by the processor 282. The signals from the second type sensors are used for compensating the signal from the first sensor in order to achieve a more accurate weighing result of the load. The compensation may thus take into account possible angle and/or acceleration of the material transfer vehicle as a whole, as well as possible acceleration and/or angle of a boom and a carrying means of the material transfer vehicle. When measuring the angle between the cabin and the horizontal plane, and relative angles between the cabin, boom parts and carrying means, it is possible to determine the angle of the carrying means in relation to the horizontal plane and in relation to the first, weighing sensor. This information is then used for the compensation of the weighing measurement in order to achieve a compensated weighing result.

The compensated weighing result is stored to a memory 283 of the electronics unit, and shown at the display 281 of the electronics unit. The display may be a touch screen, for example, with also a possibility to input information and selections by the user. The memory and the touch screen are controlled by the processor 282. The weighing of the load may be performed during the load is lifted. The user may indicate that the measurement result is saved by pressing a corresponding push button, for example, whereby the arrangement is adapted to register the detected weight of the load. It is also possible that the registering of the measurement is activated when the position of the carrying means is within certain limits.

It is also possible that in addition to informing the user of the weighing result the system also gives an alarm to the user if the load weight exceeds a predetermined safety threshold value. The predetermined threshold value may be stored to them memory 283. The alarm may be audible or visible, for example. It is also possible that exceeding the safety threshold value of the load weight causes the monitoring system to restrict further movement of the carrying means, a boom or the whole vehicle. It is also possible that exceeding the safety threshold value of the load weight causes the monitoring system to force the carrying means to be moved to ground level, for example. Such a restriction or forcing of movement is meant to reduce the risk of damages due to overload, for example. As described above, it is also possible that the safety restrictions or forcing functions are user specific. This way the restrictions for an experienced user may be lower than for an inexperienced user. Further, it is possible that the restrictions are determined by the monitoring system on the basis of learning from the measured/detected incidents of the vehicle. Such learning may also be user specific.

As described above, it is also possible to use the monitoring system for controlling pistons of a digital hydraulic system. The activated piston(s) of a cylinder is preferably selected on the basis of the weight of the load. This way it is possible to achieve good efficiency of the hydraulic system. It is possible that the monitoring system provides weight value of the load for the selection of the actuated pistons. It is also possible that the monitoring system may output control signals for controlling the hydraulic pistons.

The signals from the acceleration and/or angle sensors 22a, 22b, 22c, 22d are also used for monitoring the physical stability of the material transfer vehicle. The angle of the material transfer vehicle is determined in relation to the horizontal plane in two directions. One direction is preferably the back-front direction of the material transfer vehicle, and the other direction is preferably the left-right direction of the material transfer vehicle. Thus the angle between the first direction and the horizontal plane is determined as well as the angle between the second direction and the horizontal plane. Based on the measured acceleration and angle values the processor calculates a risk level for the overturning of the vehicle. It is possible that the input from the weight sensor 21 is also used for determining the risk value of overturning.

It should be noted that even if same angle/acceleration sensors may be used for both monitoring stability and compensation of weight calculation, it is also possible that not all such sensors are used for weight compensation. For example, it may be sufficient to use sensor(s) located close to the carrying means for the compensation, especially if weighing sensor is also located close to the carrying means. It is also possible that a weighing sensor and an angle/acceleration sensor are located in a same sensor unit. For example, a passenger hoist may include a sensor unit installed between a boom and a platform, where the sensor unit may include a weighing sensor for weighing the load, and a gyroscope and/or accelerometer for measuring angle/acceleration for compensation in weighing as well as for monitoring stability of the vehicle and possibly for controlling the platform to be in a horizontal position.

A predetermined threshold value for the risk of overturning is preferably stored in the memory 283. The risk level calculated by the processor is compared to the threshold value, and if the measured/calculated risk level exceeds the threshold value the monitoring system is arranged to give an alarm to the user. The alarm may be audible and/or visible. It is also possible that exceeding the safety threshold value of the risk for overturning causes the monitoring system to restrict further movement of the vehicle and/or parts (e.g. carrying means, boom) of the vehicle. It is further possible that exceeding the safety threshold value of the risk for overturning causes the monitoring system to force a movement of the vehicle, carrying means or a boom, such as forcing the carrying means to be moved to ground level. The risk of overturning can thus be reduced or prevented to increase by such a restriction or forcing of movement. Measurement values and alarms may also be stored in the memory 283 for possible future requirements. As described above, it is also possible that the safety restrictions or forcing functions are user specific. This way the restrictions for an experienced user may be lower than for an inexperienced user. Further, it is possible that the restrictions are determined by the monitoring system on the basis of learning from the measured/detected incidents of the vehicle. Such learning may also be user specific.

The monitoring system of Figure 2 also includes four cameras; a first camera 29F for viewing in front direction, a second camera 29B for viewing in the rear/back direction, a third camera 29L for viewing in the left direction, and fourth camera 29R for viewing in the right direction. It is naturally possible that the number of cameras is different, such as 1, 2 or higher. The cameras are preferably video cameras, but they can alternatively be still image cameras.

The cameras are coupled with serial cables or wireless data transfer means to a video interface 285 of the electronics unit 28. A video signal is further led to the processor 282, which may control the display 281 to show the video image. If several cameras are used it is possible that images from all cameras are shown in different parts of the display, or alternatively image from one camera is shown. If an image from one "active" camera is shown the active camera may be selected based on the movement of the vehicle, for example. Is such a case a camera which best shows in the direction of the vehicle movement is selected active, for example. It is also possible that no image from cameras is shown when the vehicle does not move. Further, it is also possible to use the cameras of the monitoring system for monitoring the environment outside working hours. In such a case it is preferable that the monitoring system has a wireless connection to Internet for facilitating distant monitoring. Such a communication can also be used for transferring other information, such as measurement data or alarm information. The wireless data transmission may be based on radio modem channels, Bluetooth, WLAN (Wireless Local Area Network), mobile phone networks, such as GPRS, or it may be based on some other wireless communication method.

The monitoring system may also store video images of the cameras to a memory 283. The storing may be continuous or it may be activated in some specific circumstances. It is possible that image from one active camera is stored or that image from determined or all cameras is stored. When images are stored it is possible to use the images for analysis in case of an accident, for example.

The monitoring system may further include a functionality to detect the distance between objects in the environment and the vehicle. This measurement can be based on analysis of camera images, or on information from a focusing function of the cameras. It is also possible that the monitoring system includes separate proximity sensors (not shown in Figure 2) based on ultrasound, for example. The processor 282 can provide possible calculations for the distance detection.

A distance threshold value may be stored in the memory 283. If a detected distance is shorter than the threshold value the monitoring system may provide an alarm to the user. The monitoring system may also prevent the vehicle or carrying means from moving in such a situation. The purpose of the distance detection is to reduce the risk of hitting nearby objects in the environment.

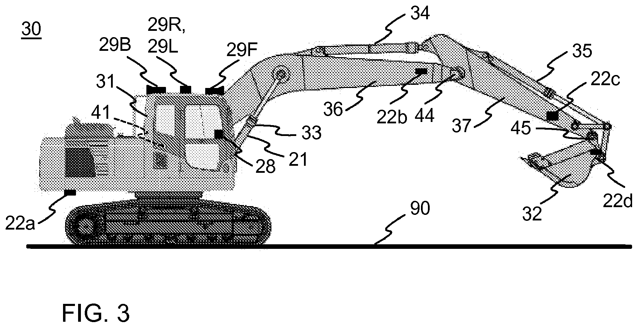

Figure 3 illustrates an excavator 30 with an exemplary monitoring system according to the invention. The monitoring system has one sensor 22a at the cabin 31 of the excavator. This acceleration sensor gives information on the movement of the whole excavator as well as the rotating movement of the cabin. The sensor 22a may include a gyroscope, a magnetic sensor and/or an acceleration sensor. The excavator has two articulated booms 36 and 37, which are moved by hydraulic cylinders 33 and 34 respectively. A bucket 32 is coupled to the boom 37, and moved with a hydraulic cylinder 35. The monitoring system has another gyroscope sensor 22b at the boom 36 for monitoring the movement of the boom. There is also a gyroscope sensor 22c at the second boom 37 and a further gyroscope sensor 22d at the bucket 32. These sensors are used for compensation in measuring the load weight of the bucket 32. The sensors are also used for stability measurement.

The monitoring system also includes at least one weighing sensor (not shown). The weighing sensor may be a pressure sensor located in one of the hydraulic cylinders 33, 34 and/or 35, preferably in the hydraulic cylinder 33. A weighing sensor may also be a strain gauge transducer which is preferably located at a joint 41 between the main boom 36 and the chassis 31 of the vehicle. Alternatively or additionally there may be a strain gauge sensor at the joint 44 between the main boom 36 and the second boom 37, or at the joint 45 between the second boom 37 and the bucket 32. The weighing sensors are used for providing initial information on the load weight. Weighing sensors may also be used in the stability measurement of the vehicle.

The monitor also has cameras 29F (front), 29 B (back/rear), 29L (left) and 29R (right), which are installed at the roof of the excavator cabin. The system may also include proximity sensors (not shown). The electronics unit 28, including the user interface of the monitoring system, is located inside the cabin 31 at an ergonomically suitable location.

The scope of the patent will be defined by the appended claims. Skilled persons will appreciate the fact that various changes and modifications may be made to the explicitly disclosed embodiments and features thereof without diverging from the scope as set forth in the claims.

For example, the carrying means is not necessarily a bucket of an excavator, but it may also be a platform or a tank of a truck or a hook of a crane, for example. It is also possible that the parts of the monitoring system are arranged into units in a different way. For example, it is possible that each sensor is equipped with an integrated amplifier and A/D-converter in order to reduce effects of electric noise coupled to cables. It is also possible to use wireless data transfer between the sensors and the electronics unit, for example.

## Claims

1. A monitoring system (20) for a material transfer vehicle, wherein the material transfer vehicle has means (32) for carrying material, and the monitoring system comprises means (21, 22a, 22b, 22c, 22d, 281, 282, 284) for monitoring physical stability of the material transfer vehicle, ,
**characterized in that** the monitoring system further comprises;
- at least one first sensor (21) for weighing the material being carried by the carrying means,
- at least one second sensor (22a, 22b, 22c, 22d) measuring an angle of a base, boom and/or carrying means of the material transfer vehicle in respect to a horizontal plane or other part of the material transfer vehicle, the second sensor comprising a gyroscope;
- processing means (282) providing a weight measurement result of the material on the basis of the information received from the first sensor and compensated using the output of the second sensor,
- user interface (281) for providing information on the weight measurement result, (21, 22a, 22b, 22c, 22d, 281, 282, 284), wherein the at least one first sensor, the at least one second sensor, the processing means and the user interface are arranged to handle both the weighing and the stability monitoring.

2. Monitoring system according to claim 1, **characterized in that** said common means comprises the first sensor, whereby the weighing measurement and the stability measurement are based on the output of the first sensor (21).

3. Monitoring system according to claim 1 or 2, **characterized in that** said common means comprises the second sensor, whereby the weighing measurement and the stability measurement are based on the output of the second sensor (22a, 22b, 22c, 22d).

4. Monitoring system according to any previous claim, **characterized in that** said information on results of the weighing measurement and results of the stability measurement is provided by the user interface (281).

5. Monitoring system according to any previous claim, **characterized in that** the processing means are arranged to process sensor output signals for providing the weighing measurement result and the stability measurement result.

6. Monitoring system according to any previous claim, **characterized in that** the stability measurement is arranged to provide a result which corresponds to the risk of overturning of the vehicle, and the monitoring system is arranged to provide an alarm when a predetermined risk level of overturning is exceeded.

7. Monitoring system according to claim 6, **characterized in that** monitoring system is arranged to restrict or force the movement of the vehicle, the carrying means of the vehicle and/or a possible boom of the vehicle when a predetermined risk level of overturning is exceeded.

8. Monitoring system according to claim 6 or 7, **characterized in that** the predetermined risk level and/or a related restriction of movement is user specific.

9. Monitoring system according to any of claims 6-8, **characterized in that** the monitoring system is arranged to monitor the risk of overturning on the basis of the received sensor data, and to define a predetermined risk level and/or restriction of movement by learning on the basis of the monitored data.

10. Monitoring system according to any previous claim, **characterized in that** the monitoring system has storage (283) for storing measurement data, alarm information and/or imaging data for later access.

11. Monitoring system according to any previous claim, **characterized in that** the monitoring system provides information on the load weight for controlling pistons of a hydraulic system in the material transfer vehicle.

## Patentansprüche

1. Überwachungssystem (20) für ein Materialtransportfahrzeug, wobei das Materialtransportfahrzeug Mittel (32) zum Befördern von Material aufweist und das Überwachungssystem Mittel (21, 22a, 22b, 22c, 22d, 281, 282, 284) zum Überwachen der physischen Stabilität des Materialtransportfahrzeugs umfasst,
**dadurch gekennzeichnet, dass** das Überwachungssystem ferner Folgendes umfasst:
- wenigstens einen ersten Sensor (21) zum Wiegen des Materials, das durch die Beförderungsmittel befördert wird,
- wenigstens einen zweiten Sensor (22a, 22b, 22c, 22d), der einen Winkel einer Basis, eines Auslegers und/oder von Beförderungsmitteln des Materialtransportfahrzeugs in Bezug auf eine horizontale Ebene oder einen anderen Teil des Materialtransportfahrzeugs misst, wobei der zweite Sensor einen Kreisel umfasst,
- Verarbeitungsmittel (282), die ein Gewichtsmessergebnis des Materials auf der Grundlage der Informationen, die von dem ersten Sensor erhalten und unter Verwendung der Ausgabe des zweiten Sensors ausgeglichen werden, bereitstellt,
- eine Benutzerschnittstelle (281) zum Bereitstellen von Informationen über das Gewichtsmessergebnis, (21, 22a, 22b, 22c, 22d, 281, 282, 284), wobei der wenigstens eine erste Sensor, der wenigstens eine zweite Sensor, die Verarbeitungsmittel und die Benutzerschnittstelle dafür angeordnet sind, sowohl das Wiegen als auch die Stabilitätsüberwachung zu handhaben.

2. Überwachungssystem nach Anspruch 1, **dadurch gekennzeichnet, dass** das gemeinsame Mittel den ersten Sensor umfasst, wodurch die Gewichtsmessung und die Stabilitätsmessung auf der Ausgabe des ersten Sensors (21) beruhen.

3. Überwachungssystem nach Anspruch 1 oder 2, **dadurch gekennzeichnet, dass** das gemeinsame Mittel den zweiten Sensor umfasst, wodurch die Gewichtsmessung und die Stabilitätsmessung auf der Ausgabe des zweiten Sensors (22a, 22b, 22c, 22d) beruhen.

4. Überwachungssystem nach einem der vorhergehenden Ansprüche, **dadurch gekennzeichnet, dass** die Informationen über Ergebnisse der Gewichtsmessung und Ergebnisse der Stabilitätsmessung durch die Benutzerschnittstelle (281) bereitgestellt werden.

5. Überwachungssystem nach einem der vorhergehenden Ansprüche, **dadurch gekennzeichnet, dass** die Verarbeitungsmittel dafür angeordnet sind, zum Bereitstellen des Gewichtsmessergebnisses und des Stabilitätsmessergebnisses Sensorausgangssignale zu verarbeiten.

6. Überwachungssystem nach einem der vorhergehenden Ansprüche, **dadurch gekennzeichnet, dass** die Stabilitätsmessung dafür angeordnet ist, ein Ergebnis bereitzustellen, das der Gefahr eines Umkippens des Fahrzeugs entspricht, und das Überwachungssystem dafür angeordnet ist, einen Alarm bereitzustellen, wenn ein vorbestimmtes Gefahrenniveau eines Umkippens überschritten wird.

7. Überwachungssystem nach Anspruch 6, **dadurch gekennzeichnet, dass** das Überwachungssystem dafür angeordnet ist, die Bewegung des Fahrzeugs, der Beförderungsmittel des Fahrzeugs und/oder eines möglichen Auslegers des Fahrzeugs zu beschränken oder zu erzwingen, wenn ein vorbestimmtes Gefahrenniveau eines Umkippens überschritten wird.

8. Überwachungssystem nach Anspruch 6 oder 7, **dadurch gekennzeichnet, dass** das vorbestimmte Gefahrenniveau und/oder eine damit verbundene Bewegungsbeschränkung benutzerspezifisch sind.

9. Überwachungssystem nach einem der Ansprüche 6 bis 8, **dadurch gekennzeichnet, dass** das Überwachungssystem dafür angeordnet ist, die Gefahr eines Umkippens auf der Grundlage der erhaltenen Sensordaten zu überwachen und ein vorbestimmtes Gefahrenniveau und/oder eine Bewegungsbeschränkung durch Lernen auf der Grundlage der überwachten Daten zu definieren.

10. Überwachungssystem nach einem der vorhergehenden Ansprüche, **dadurch gekennzeichnet, dass** das Überwachungssystem einen Speicher (283) zum Speichern von Messdaten, Alarminformationen und/oder Bildgebungsdaten für einen späteren Zugriff aufweist.

11. Überwachungssystem nach einem der vorhergehenden Ansprüche, **dadurch gekennzeichnet, dass** das Überwachungssystem Informationen über das Lastgewicht zum Steuern von Kolben einer Hydraulikanlage in dem Materialtransportfahrzeug bereitstellt.

## Revendications

1. Système de surveillance (20) pour véhicule de transfert de matériau, le véhicule de transfert de matériau comportant un moyen (32) de transport de matériau, et le système de surveillance comprenant un moyen (21, 22a, 22b, 22c, 22d, 281, 282, 284) pour surveiller la stabilité physique du véhicule de transfert de matériau,
**caractérisé en ce que** le système de surveillance comprend en outre :
- au moins un premier capteur (21) pour peser le matériau qui est transporté par le moyen de transport,
- au moins un second capteur (22a, 22b, 22c, 22d) mesurant un angle d'une base, d'une flèche et/ou d'un moyen de transport du véhicule de transfert de matériau par rapport à un plan horizontal ou à une autre partie du véhicule de transfert de matériau, le second capteur comprenant un gyroscope ;
- un moyen de traitement (282) donnant un résultat de mesure de poids du matériau sur la base de l'information reçue de la part du premier capteur et compensée en utilisant la sortie du second capteur,
- une interface d'utilisateur (281) pour donner une information sur le résultat de mesure de poids (21, 22a, 22b, 22c, 22d, 281, 282, 284), l'au moins un premier capteur, l'au moins un second capteur, le moyen de traitement et l'interface d'utilisateur étant conçus pour s'occuper à la fois du pesage et de la surveillance de stabilité.

2. Système de surveillance selon la revendication 1, **caractérisé en ce que** ledit moyen commun comprend le premier capteur, la mesure de poids et la mesure de stabilité étant basées sur la sortie du premier capteur (21).

3. Système de surveillance selon la revendication 1 ou 2, **caractérisé en ce que** ledit moyen commun comprend le second capteur, la mesure de poids et la mesure de stabilité étant basées sur la sortie du second capteur (22a, 22b, 22c, 22d).

4. Système de surveillance selon l'une quelconque des revendications précédentes, **caractérisé en ce que** ladite information sur les résultats de la mesure de poids et les résultats de la mesure de stabilité est fournie par l'interface d'utilisateur (281).

5. Système de surveillance selon l'une quelconque des revendications précédentes, **caractérisé en ce que** le moyen de traitement est conçu pour traiter les signaux de sortie de capteur pour donner le résultat de mesure de poids et le résultat de mesure de stabilité.

6. Système de surveillance selon l'une quelconque des revendications précédentes, **caractérisé en ce que** la mesure de stabilité est conçue pour donner un résultat qui correspond au risque de renversement du véhicule, et le système de surveillance est conçu pour émettre une alarme lorsqu'un niveau de risque prédéterminé de renversement est dépassé.

7. Système de surveillance selon la revendication 6, **caractérisé en ce que** le système de surveillance est conçu pour restreindre ou forcer le mouvement du véhicule, le moyen de transport du véhicule et/ou une éventuelle flèche du véhicule lorsqu'un niveau de risque prédéterminé de renversement est dépassé.

8. Système de surveillance selon la revendication 6 ou 7, **caractérisé en ce que** le niveau de risque prédéterminé et/ou une restriction relative de mouvement est spécifique à l'utilisateur.

9. Système de surveillance selon l'une quelconque des revendications 6 à 8, **caractérisé en ce que** le système de surveillance est conçu pour contrôler le risque de renversement sur la base des données de capteur reçues, et pour définir un niveau de risque prédéterminé et/ou une restriction de mouvement en apprenant sur la base des données contrôlées.

10. Système de surveillance selon l'une quelconque des revendications précédentes, **caractérisé en ce que** le système de surveillance comporte une mémoire (283) pour sauvegarder des données de mesure, une information sur les alarmes et/ou des données d'imagerie pour un accès ultérieur.

11. Système de surveillance selon l'une quelconque des revendications précédentes, **caractérisé en ce que** le système de surveillance donne une information sur le poids de la charge pour contrôler les pistons d'un système hydraulique dans le véhicule de transfert de matériau.
